# EUROPEAN PATENT APPLICATION

(11) **EP 3 702 862 A1**
(43) Date of publication of application: **02.09.2020**
(21) Application number: 19160018.8
(22) Date of filing: 28.02.2019
(51) Int. Cl.: G05B 23/02, G06N 3/00, G06N 7/00

(54) **AUTOMATED REFINEMENT OF A LABELED WINDOW OF TIME SERIES DATA**

(71) Applicant: Siemens Aktiengesellschaft, 80333 München (DE)
(72) Inventor: Geipel, Markus Michael, 80799 München (DE); Günnemann-Gholizadeh, Nikou, 80336 München (DE); Merk, Stephan, 80804 München (DE); Mittelstädt, Sebastian, 81541 München-Haidhausen (DE)

(57) **Abstract**

A device (200) obtains a set of time series data (20) monitored on a machine (100) and further obtains first label information indicating a first time window (21) in the time series data (20). The device (200) determines a first probabilistic model (225), describing dynamics of the time series data (20) inside the first time window (21), and a second probabilistic model (235) describing dynamics of the time series data adjacent to the first time window (21). Based on the first probabilistic model (225) and the second probabilistic model (235), the device (200) determines a first part of the time series data (20) that is estimated to match the first probabilistic model (225) and a second part of the time series data (20) that is estimated to match the second probabilistic model (235), e.g., using a hidden Markov model based on the first probabilistic model (225) and the second probabilistic model (235). The device (200) then determines second label information indicating a second time window (21') which includes the first part of the time series data (20) and excludes the second part of the time series data (20).

## Description

The present disclosure relates to devices and methods for analyzing time series data.

In various technical fields, there is a need to monitor operation of machines or machine systems. For example in the field of oil or gas production, a large number of pumps, typically electric submersible pumps (ESPs), may be monitored for purposes of providing preventive maintenance and thereby ensuring high availability.

In order to efficiently monitor a large number of machines, it is desirable to utilize a monitoring mechanism which is, at least in part, based on artificial intelligence (AI). Such AI based mechanism may analyze time series data obtained by monitoring a plurality of machines, automatically identify anomalous behavior, and trigger measures to resolve issues causing the anomalous behavior, e.g., by issuing a warning to an operator. When monitoring pumps, the AI based mechanism may for example automatically classify a detected anomaly, e.g., as a congestion, a leakage, a broken shaft, or the like.

To train such AI mechanism, it is typically required to provide manually labeled training data. In such labeled data, labels identify time windows in which the time series data exhibits a specific type of dynamic, which may in turn be indicative of an anomalous behavior or a regular behavior. The manual creation of the labels is a tedious process. Further, the manual setting of the time windows is often inaccurate and typically results in setting the time windows too wide, thus not covering not only the behavior of interest, but also other data. When using the labeled data for training the AI mechanism, this inaccuracy may in turn adversely affect performance of the AI mechanism.

Accordingly, there is a need for technologies that allow for efficiently and accurately determining label information for time series data obtained by monitoring a machine.

In view of the above need, the present disclosure provides a device as defined in claim 1 and a method as defined in claim 12. The dependent claims define further embodiments.

According to an embodiment, a device for analyzing time series data is provided. The device is configured to:
- obtain a set of time series data monitored on a machine, e.g., a machine comprising at least one of: a pump, in particular a submersible pump, a mill, e.g., for milling ore, an electric motor, a combustion engine, and a turbine;
- obtain first label information indicating a first time window in the time series data;
- determine a first probabilistic model describing dynamics of the time series data inside the first time window;
- determine a second probabilistic model describing dynamics of the time series data adjacent to the first time window;
- based on the first probabilistic model and the second probabilistic model, determine a first part of the time series data that is estimated to match the first probabilistic model and a second part of the time series data that is estimated to match the second probabilistic model; and
- determine second label information indicating a second time window which includes the first part of the time series data and excludes the second part of the time series data.

In this way, setting of the first time window can be refined in an automated and precise manner.

According to an embodiment, the device is configured to determine the first part of the time series data and the second part of the time series data based on a hidden Markov model (HMM). By means of the HMM, time consistency can be ensured in an efficient manner when determining the second time window.

According to an embodiment, the device is further configured to:
- determine a third probabilistic model describing dynamics of the time series data inside the second time window;
- determine a fourth probabilistic model describing dynamics of the time series data adjacent to the second time window;
- based on the third probabilistic model and the fourth probabilistic model, determining a third part of the time series data that is estimated to match the third probabilistic model and a fourth part of the time series data that is estimated to match the fourth probabilistic model; and
- determine third label information indicating a third time window which includes the third part of the time series data and excludes the fourth part of the time series data. Accordingly, the device may operate in an iterative manner by iterating the refinement of the time window multiple times, thereby successively further improving preciseness the setting of the time window.

According to a further embodiment, a method of analyzing time series data is provided. The method comprises:
- obtaining a set of time series data monitored on a machine;
- obtaining first label information indicating a first time window in the time series data;
- determining a first probabilistic model describing dynamics of the time series data inside the first time window;
- determining a second probabilistic model describing dynamics of the time series data adjacent to the first time window;
- based on the first probabilistic model and the second probabilistic model, determining a first part of the time series data that is estimated to match the first probabilistic model and a second part of the time series data that is estimated to match the second probabilistic model; and
- determining second label information indicating a second time window which includes the first part of the time series data and excludes the second part of the time series data.

By means of the method, setting of the first time window can be refined in an automated and precise manner.

According to an embodiment, the method comprises determining the first part of the time series data and the second part of the time series data based on an HMM. By means of the HMM, time consistency can be ensured in an efficient manner when determining the second time window.

According to an embodiment, the method further comprises:
- determining a third probabilistic model describing dynamics of the time series data inside the second time window;
- determining a fourth probabilistic model describing dynamics of the time series data adjacent to the second time window;
- based on the third probabilistic model and the fourth probabilistic model, determining a third part of the time series data that is estimated to match the third probabilistic model and a fourth part of the time series data that is estimated to match the fourth probabilistic model; and
- determining third label information indicating a third time window which includes the third part of the time series data and excludes the fourth part of the time series data. Accordingly, the method can iterate refinement of the time window multiple times, thereby successively further improving precision of the setting of the time window.

According to an embodiment of the device or method, the HMM is based on subdividing the time series data into a plurality of time intervals and defining two hidden states for each of the time intervals, the two hidden states comprising a first hidden state corresponding to the time series data in the respective time interval matching the first probabilistic model and a second hidden state corresponding to the time series data in the respective time interval matching the second probabilistic model. In the HMM, state transitions between the hidden states of adjacent time intervals are determined based on the first probabilistic model and the second probabilistic model. Observed states of the HMM may correspond to the respective time interval being either outside the first time window or inside the first time window. In this way, estimation of the hidden states of the HMM can be efficiently applied to determine the second time window.

According to an embodiment of the device or method, the HMM is configured to limit probability of state transitions between the first hidden state and the second hidden state. In this way, time consistency can be further improved when determining the second time window.

According to an embodiment of the device or method, the first label information is configured by user input. Accordingly, the device or method can be utilized to precisely and efficiently refine a manual setting of the time window.

According to an embodiment of the device or method, the first time window is wider than the second time window. Accordingly, the device or method can efficiently address that there is a tendency to set time windows around potential anomalies too wide.

In the above embodiments of the device or method, the machine may comprise a pump. In this case, the time series data may comprise at least one of: a motor temperature of the pump, an inlet temperature of the pump, an operating power of the pump, a pressure inside the pump, a pressure outside the pump. Accordingly, the device or method may be utilized enabling enhanced monitoring of the pump, e.g., by an AI based mechanism.

In the following, embodiments of the present disclosure will be described in more detail and with reference to the accompanying drawings.
- Fig. 1: schematically illustrates an example of time series data which may be analyzed according to an embodiment of the present disclosure.
- Fig. 2: schematically illustrates a monitoring system according to an embodiment of the present disclosure.
- Fig. 3: schematically illustrates an example of utilizing an HMM in a label refinement process according to an embodiment of the present disclosure.
- Fig. 4: schematically illustrates a further example of utilizing an HMM in a label refinement process according to an embodiment of the present disclosure.
- Fig. 5: shows a flowchart for schematically illustrating a method according to an embodiment of the present disclosure.
- Fig. 6: shows a block diagram for schematically illustrating structures of a device according to the present disclosure.

It is noted that in the following detailed description of embodiments the accompanying drawings are only schematic and that the illustrated elements are not necessarily shown to scale. Rather, the drawings are intended to illustrate functions and cooperation of components. Here, it is to be understood that any connection or coupling of functional blocks, devices, components, or other physical or functional elements could also be implemented by an indirect connection or coupling, e.g., via one or more intermediate elements. A connection or coupling of elements or components can for example be implemented by a wire-based, a wireless connection, and/or a combination of a wire-based and a wireless connection. Functional blocks can be implemented by dedicated hardware, by firmware and/or software installed on programmable hardware, and/or by a combination of dedicated hardware and firmware or software.

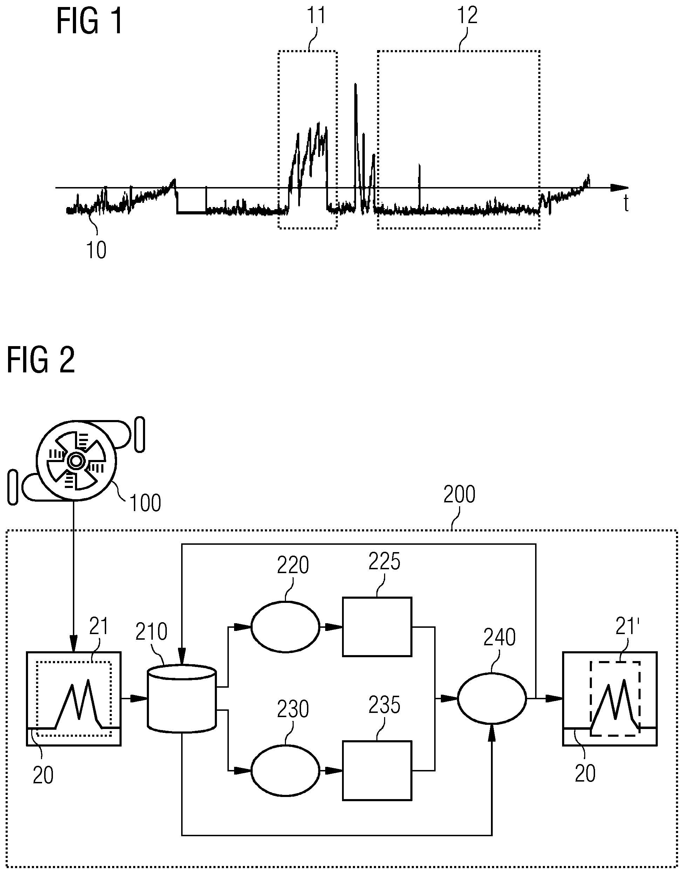

Fig. 1 schematically illustrates an example of time series data 10. The time series data 10 may for example be provided by a sensor on an electric submersible pump (ESP). The time series data 10 could for example represent a pressure measured inside the ESP, such as a head pressure of the ESP. In other examples the time series data 10 could represent a pressure measured outside the ESP, such as a ring pressure or ground pressure. In still further examples the time series data 10 could represent an operating power of the ESP, e.g., in terms of a motor current.

In the example of Fig. 1, the time series data 10 is provided with labels, corresponding to time windows 11, 12 in which the time series data 10 exhibits a certain type of dynamic or behavior. The labels may for example be assigned manually or by some automated process, e.g., based on pattern matching. In the illustrated example, the time series data 10 in the time window 11 may for example correspond to an anomalous behavior, e.g., due to a congestion, a leakage, or a broken shaft, while the time series data 10 in the time window 12 may for example correspond to a normal behavior during regular operation of the ESP.

In the illustrated concepts, labels like explained in connection with Fig. 1 may be refined in an automated and precise manner. In particular, the time windows defined by the labels may be adjusted in such a way that they precisely match a part of the time series data showing a certain type of dynamic or behavior. In this way, for example the time window may be set precisely to include only the part of the time series data which shows anomalous behavior, while another part of the time series data remains outside the time window.

Fig. 2 schematically illustrates a monitoring system equipped with an analysis tool 200 configured to perform the automated label refinement according to the illustrated concepts.

As illustrated, the analysis tool 200 receives time series data 20 from a machine 100. As mentioned above, the machine 100 may be a pump, in particular an ESP. However, it is to be understood that the analysis tool 200 could also be utilized for analyzing time series data monitored on other types of machines, e.g., an industrial mill, a turbine, or a combustion engine. As further illustrated, the time series data 20 is provided with an initial label defining an initial time window 21, illustrated by a dotted line. The label may be manually defined based on a user input, or may be automatically defined. As can be seen, the time window 21 defined by the initial label is slightly too wide and also includes times series data 20 having a dynamic similar to the surrounding of the time window 21.

In the illustrated example, the analysis tool 200 is provided with a memory 210 for storing the time series data 20. This is accomplished by distinguishing between labeled time series data 20, i.e., the time series data 20 inside the time window 21, and unlabeled time series data 20, i.e., the time series data 20 outside the time window. The labeled time series data 20 are provided to a first fitting stage 220. The unlabeled time series data 20 are provided to a second fitting stage 230. The first fitting stage 220 performs probabilistic model fitting on the labeled time series data 20, thereby obtaining a first probabilistic model 225 for the labeled time series data 20. The second fitting stage 230 performs probabilistic model fitting on the unlabeled time series data 20, thereby obtaining a second probabilistic model 235 for the unlabeled time series data 20, in particular for the time series data 20 adjacent to the time window 21. The first probabilistic model 225 and the second probabilistic model 235 may for example each be based on a Gaussian mixture model.

This first and second probabilistic model 225, 235 may each be provided in the form of a function which, for a certain data point or time interval of the time series data 20, outputs a probability of observing this data point time interval. In combination the first probabilistic model 225 and the second probabilistic model 235 may thus allow for deciding whether a certain time interval of the time series data 20 better matches the dynamic of the time series data 20 inside the time window 21 or the dynamic of the time series data 20 inside the time window 21. The probabilistic models 225, 235 can either be applied directly to the time series data 20 or to features derived from the time series data 20, e.g., features of time intervals of the time series data 20.

As further illustrated, the first probabilistic model 225 and the second probabilistic model 235 are provided to a third fitting stage 240. The third fitting stage 240 utilizes a hidden Markov model (HMM) which is based on the first probabilistic model 225 and the second probabilistic model 235. Both the labeled and the unlabeled time series data 20 are provided to the third fitting stage 240, for performing fitting to the HMM. By fitting to the HMM consistency of the initially set time window 21 can be checked and the setting of the time window 21 adjusted to obtain a refined time window 21', illustrated by a broken line.

For this purpose, the HMM may be configured with two hidden states for each time interval of the time series data 20. A first hidden state corresponding to the time series data 20 in the time interval matching the first probabilistic model 225, and a second hidden state corresponding to the time series data 20 in the time interval matching the second probabilistic model 235. Observed states of the HMM may correspond to the assignments of the intervals according to the initial label, i.e., whether the time series data 20 are labeled (inside the time window 21) or unlabeled (outside the time window 21). The hidden states of the HMM can be estimated using the Viterbi algorithm.

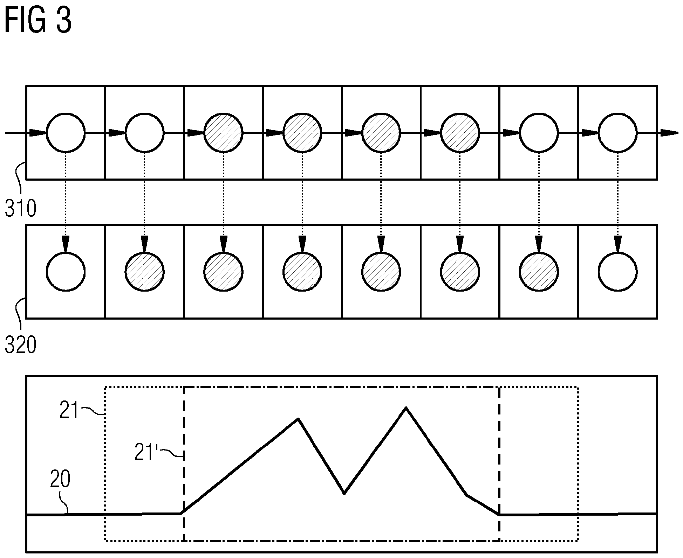

Fig. 3 shows an example of utilizing the HMM to determine the refined time window 21'. In Fig. 3, the hidden states of the HMM are denoted by 310 and the observed states by 320. Transition probabilities are denoted by solid arrows, and emission probabilities are denoted by dotted arrows. As can be seen, the time series data 20 are subdivided into multiple intervals, each being associated with a hidden state and an observed state as explained above. For the hidden states 310, a shaded circle illustrates that the hidden state corresponds to the time series data matching the first probabilistic model, and an open circle illustrates that the hidden state corresponds to the time series data matching the second probabilistic model. In the observed states 320, a shaded circle illustrates that the observed state corresponds to the time series data being inside the initial time window 21, and an open circle illustrates that the observed state corresponds to the time series data being outside the initial time window 21. The estimated hidden states 310 thus define the refined time window 21'. In the example of Fig. 3, the refined time window 21' is narrowed down as compared to the initial time window 21.

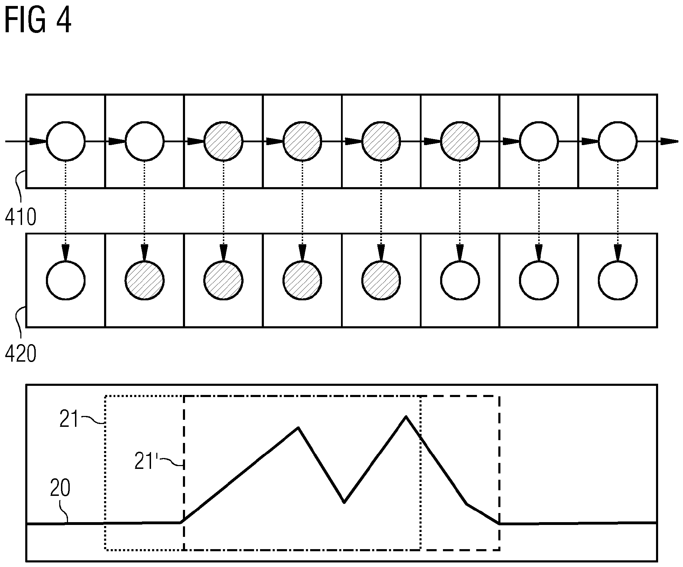

Fig. 4 shows a further example of utilizing the HMM to determine the refined time window 21'. In Fig. 4, the hidden states of the HMM are denoted by 410 and the observed states by 420. Like in Fig. 3, transition probabilities are denoted by solid arrows, emission probabilities are denoted by dotted arrows, and the time series data 20 are subdivided into multiple intervals, each being associated with a hidden state and an observed state as explained above. For the hidden states 410, a shaded circle illustrates that the hidden state corresponds to the time series data matching the first probabilistic model, and an open circle illustrates that the hidden state corresponds to the time series data matching the second probabilistic model. In the observed states 420, a shaded circle illustrates that the observed state corresponds to the time series data being inside the initial time window 21, and an open circle illustrates that the observed state corresponds to the time series data being outside the initial time window 21. In the example of Fig. 4, the refined time window 21' is narrowed down and shifted as compared to the initial time window 21.

In the HMM, transition probabilities between the hidden states of two adjacent time intervals may be set to low values, e.g., 0.5 or lower, thereby further ensuring time consistency of the of the estimation process. The emission probabilities result from the probabilistic models 225, 235.

Having determined the refined time window 21', the time series data 20 may be output together with a correspondingly updated label. For example, the time series data 20 with the updated label could be used as input data for training an AI based monitoring algorithm. As an alternative or in addition, the time series data 20 with the updated label could be displayed to a user.

As further illustrated in Fig. 2, the analysis tool 200 may operate in an iterative manner. That is to say, the time series data 20 with the updated label may be fed back to the memory 210 and the above-described processes repeated, with the refined time window 21' then taking the place of a new initial time window. Such iterations may be repeated until a certain stopping criterion is met, e.g., the change of the refined time window 21' as compared to the previous iteration being below a threshold or reaching a preconfigured maximum number of iterations.

Accordingly, the analysis tool 200 may efficiently and precisely provide a refined setting of the time window of the labeled time series data 20. The improved precision may in turn allow for achieving a better performance of an AI based monitoring algorithm, e.g., by using the time series data with the refined labels as training data for a machine learning process.

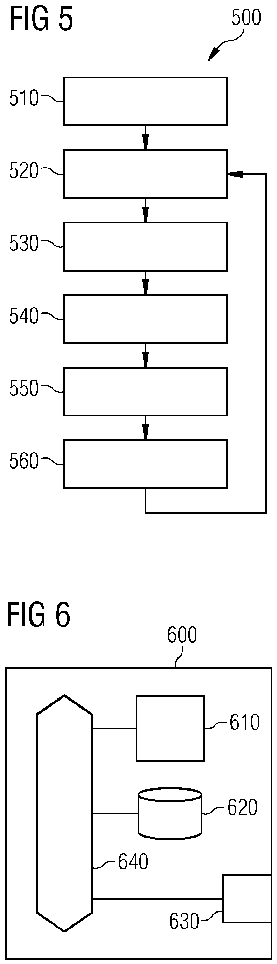

Fig. 5 shows a flow chart for illustrating a method which can be used for implementing the illustrated concepts in a device, such as in the above-mentioned analysis tool 200. The method may for example be implemented by execution of program code by one or more processors of the device. The program code can be stored in a memory of the node.

At block 510, the device obtains a set of time series data. The time series data is monitored on a machine, e.g., a pump, in particular a submersible pump for oil or gas production. However, on other scenarios the machine could also correspond to a mill, an electric motor, a combustion engine, or a turbine. The above-mentioned time series data 10, 20 are examples of such set of time series data. If the machine corresponds to or includes a pump, the time series data may for example include: a motor temperature of the pump, an inlet temperature of the pump, an operating power of the pump, a pressure inside the pump, and/or a pressure outside the pump.

At block 520, the device obtains first label information for the time series data. The label information indicates a first time window in the time series data, e.g., like the above-mentioned time windows 11, 12, 21. The first time window may be set based on user input. However, it is also possible that the first time window is at least partially set based on an automated process, e.g., using pattern matching or the like.

At block 530, the device determines a first probabilistic model describing dynamics of the time series data inside the first time window. The first probabilistic model may for example be based on a Gaussian mixture model. The above-mentioned probabilistic model 225 is an example of such first probabilistic model.

At block 540, the device determines a second probabilistic model describing dynamics of the time series data inside the first time window. The second probabilistic model may for example be based on a Gaussian mixture model. The above-mentioned probabilistic model 235 is an example of such second probabilistic model.

At block 550, the device determines, based on the first probabilistic model and the second probabilistic model, a first part of the time series data that is estimated to match the first probabilistic model and a second part of the time series data that is estimated to match the second probabilistic model. The determination of the first part and the second part may be based on an HMM, e.g., by a fitting process as explained above for the third fitting stage 240.

The HMM may be based on subdividing the time series data into a plurality of time intervals and defining two possible hidden states for each of the time intervals. In this case, the two hidden states may include a first hidden state corresponding to the time series data in the respective time interval matching the first probabilistic model and a second hidden state corresponding to the time series data in the respective time interval matching the second probabilistic model. Observed states of the HMM may correspond to the respective time interval being either outside the first time window or inside the first time window.

In the HMM, state transitions between the hidden states of adjacent time intervals are determined based on the first probabilistic model and the second probabilistic model. The HMM may be configured to limit probability of state transitions between the first hidden state and the second hidden state, e.g., by setting a transition probability matrix of the HMM accordingly. For example, the transition probabilities may be limited to a maximum of 0.5, or preferably to a maximum of 0.2.

At block 560, the device determines second label information indicating a second time window which includes the first part of the time series data and excludes the second part of the time series data. The above-mentioned refined time window 21' is an example of such second time window. The second time window determined at block 560 is typically narrower than the first time window.

The method of Fig. 5 may be performed in an iterative manner. In particular, when having determined the second time window at block 560, the method may return to block 520 and repeat the processes as explained in connection with blocks 520, 530, 550, and 560 with the second time window then taking the place of the first time window.

Fig. 6 shows a block diagram for schematically illustrating structures of a device 600. The device 600 may for example be used for implementing the above-mentioned analysis tool 200. In the illustrated example, the device 600 includes at least one processor 610 and a memory 620. Further, the device 600 includes at least one interface 630, which may be used for obtaining the above-mentioned time series data and initial label information. Further, the interface 630 may also be used for outputting the timer series data and together with the refined label information. The interface 630 may also include a user interface for receiving user inputs, e.g., to define the initial label information and/or to indicate the time series data with the refined label information to the user. The components of device 600, i.e., the at least one processor 610, the memory 620, and the at least one interface 630 may for example be coupled to each other by a data bus 640 or similar internal communication infrastructure of the device 600. By execution of program code by the at least one processor 610, the device 600 may be configured to operate according to the above-described functionalities of the analysis tool 200 and/or implement the method 500 as explained in connection with Fig. 5.

It is to be understood that the above description of examples is intended to be illustrative and that the illustrated concepts are susceptible to various modifications. For example, the illustrated concepts could be applied to monitoring various types of machine or machine systems and various types of data which can be monitored on a machine or machine system, and the refined label information may be utilized in various ways.

## Claims

1. A device (200; 600) for analyzing time series data, the device (200; 600) being configured to:
- obtain a set of time series data (10; 20) monitored on a machine (100);
- obtain first label information indicating a first time window (11, 12; 21) in the time series data (10; 20);
- determine a first probabilistic model describing dynamics of the time series data (20) inside the first time window (11, 12; 21);
- determine a second probabilistic model describing dynamics of the time series data adjacent to the first time window (11, 12; 21);
- based on the first probabilistic model and the second probabilistic model, determine a first part of the time series data (20) that is estimated to match the first probabilistic model and a second part of the time series data (20) that is estimated to match the second probabilistic model; and
- determine second label information indicating a second time window (21') which includes the first part of the time series data (20) and excludes the second part of the time series data (20).

2. The device (200; 600) according to claim 1,
wherein the device (200; 600) is configured to determine the first part of the time series data (20) and the second part of the time series data based on a hidden Markov model.

3. The device (200; 600) according to claim 2,
wherein the hidden Markov model is based on subdividing the time series data into a plurality of time intervals and defining two hidden states for each of the time intervals, the two hidden states comprising a first hidden state corresponding to the time series data in the respective time interval matching the first probabilistic model and a second hidden state corresponding to the time series data in the respective time interval matching the second probabilistic model.

4. The device (200; 600) according to claim 3,
wherein in the hidden Markov model state transitions between the hidden states of adjacent time intervals are determined based on the first probabilistic model and the second probabilistic model.

5. The device (200; 600) according to claim 4,
wherein the hidden Markov model is configured to limit probability of state transitions between the first hidden state and the second hidden state.

6. The device (200; 600) according to any one of claims 3 to 5,
wherein observed states of the hidden Markov model correspond to the respective time interval being either outside the first time window or inside the first time window.

7. The device (200; 600) according to any one of the preceding claims,
wherein the device (200; 600) is further configured to:
- determine a third probabilistic model describing dynamics of the time series (20) data inside the second time window (21');
- determine a fourth probabilistic model describing dynamics of the time series data adjacent to the second time window (21');
- based on the third probabilistic model and the fourth probabilistic model, determining a third part of the time series data (20) that is estimated to match the third probabilistic model and a fourth part of the time series data (20) that is estimated to match the fourth probabilistic model; and
- determine third label information indicating a third time window which includes the third part of the time series data (20) and excludes the fourth part of the time series data (20).

8. The device (200; 600) according to any one of the preceding claims,
wherein the first label information is configured by user input.

9. The device (200; 600) according to any one of the preceding claims,
wherein the first time window (11, 12; 21) is wider than the second time window (21').

10. The device (200; 600) according to any one of the preceding claims,
wherein the machine (100) comprises at least one of: a pump, a mill, an electric motor, a combustion engine, and a turbine.

11. The device (200; 600) according to any one of the preceding claims,
wherein the machine (100) comprises a pump and the time series data comprise at least one of: a motor temperature of the pump, an inlet temperature of the pump, an operating power of the pump, a pressure inside the pump, a pressure outside the pump.

12. A method (500) of analyzing time series data, the method (500) comprising:
- obtaining a set of time series data (10; 20) monitored on a machine (100);
- obtaining first label information indicating a first time window (11, 12; 21) in the time series data (10; 20);
- determining a first probabilistic model describing dynamics of the time series data (20) inside the first time window (11, 12; 21);
- determining a second probabilistic model describing dynamics of the time series data adjacent to the first time window (11, 12; 21);
- based on the first probabilistic model and the second probabilistic model, determining a first part of the time series data (20) that is estimated to match the first probabilistic model and a second part of the time series data (20) that is estimated to match the second probabilistic model; and
- determining second label information indicating a second time window (21') which includes the first part of the time series data (20) and excludes the second part of the time series data (20).

13. The method (500) according to claim 12, comprising:
- determining the first part of the time series data (20) and the second part of the time series data based on a hidden Markov model.

14. The method (500) according to claim 13,
wherein the hidden Markov model is based on subdividing the time series data into a plurality of time intervals and defining two hidden states for each of the time intervals, the two hidden states comprising a first hidden state corresponding to the time series data in the respective time interval matching the first probabilistic model and a second hidden state corresponding to the time series data in the respective time interval matching the second probabilistic model, wherein in the hidden Markov model state transitions between the hidden states of adjacent time intervals are determined based on the first probabilistic model and the second probabilistic model, and
wherein observed states of the hidden Markov model correspond to the respective time interval being either outside the first time window or inside the first time window.

15. The method (500) according to any one of claims 12 to 14, further comprising:
- determining a third probabilistic model describing dynamics of the time series (20) data inside the second time window (21');
- determining a fourth probabilistic model describing dynamics of the time series data adjacent to the second time window (21');
- based on the third probabilistic model and the fourth probabilistic model, determining a third part of the time series data (20) that is estimated to match the third probabilistic model and a fourth part of the time series data (20) that is estimated to match the fourth probabilistic model; and
- determining third label information indicating a third time window which includes the third part of the time series data (20) and excludes the fourth part of the time series data (20).

16. A computer program product directly loadable into the internal memory of a digital computer, comprising software code portions for performing the steps of one of claims 12 to 15 when said product is run on a computer.
